(19) Europäisches Patentamt
European Patent Office
Office européen des brevets

(11) EP 0 614 990 B1

(12) **EUROPÄISCHE PATENTSCHRIFT**

(45) Veröffentlichungstag und Bekanntmachung des Hinweises auf die Patenterteilung:
**03.12.1997 Patentblatt 1997/49**

(51) Int Cl.$^6$: **C21B 13/14**

(21) Anmeldenummer: **94200520.8**

(22) Anmeldetag: **01.03.1994**

(54) **Verfahren zur Direktreduktion von eisenoxidhaltigen Materialien mit festen kohlenstoffhaltigen Reduktionsmitteln**

Process for the reduction of iron ores with reducing agents containing solid carbon

Procédé de réduction du minerai de fer avec des réducteurs contenant du carbone solide

(84) Benannte Vertragsstaaten:
**DE FR SE**

(30) Priorität: **10.03.1993 DE 4307484**

(43) Veröffentlichungstag der Anmeldung:
**14.09.1994 Patentblatt 1994/37**

(60) Teilanmeldung: **97103922.7**

(73) Patentinhaber: **METALLGESELLSCHAFT AG**
**60323 Frankfurt am Main (DE)**

(72) Erfinder:
- **Bresser, Wolfgang**
  **D-63762 Grossostheim (DE)**
- **Hirsch, Martin, Dr.**
  **D-61381 Friedrichsdorf (DE)**
- **Kösters, Bernd**
  **D-16348 Wandlitz (DE)**
- **Rose, Fritz, Dr.**
  **D-61352 Bad Homburg (DE)**

(56) Entgegenhaltungen:
| | |
|---|---|
| **EP-A- 0 236 802** | **EP-A- 0 255 180** |
| **EP-A- 0 364 865** | **DE-A- 3 418 085** |
| **US-A- 4 094 665** | |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Direktreduktion von eisenoxidhaltigen Materialien unter Verwendung von festen kohlenstoffhaltigen Reduktionsmitteln, wobei die eisenoxidhaltigen Materialien in einer ersten expandierten Wirbelschicht unter Zufuhr von festen kohlenstoffhaltigen Reduktionsmiteln sowie von Fluidisierungsgas unter schwach reduzierenden Bedingungen und einer so kurzen Verweilzeit des Gases in der Wirbelschicht reduziert werden, daß das Reduktionspotential maximal zur Reduktion bis zum FeO-Stadium führt, die aus der ersten expandierenden Wirbelschicht ausgetragene Gas-Feststoff-Suspension in eine zweite expandierte Wirbelschicht geleitet wird, in die zweite Wirbelschicht ein stark reduzierendes Gas als Fluidisierungsgas eingeleitet wird, aus dem Oberteil der zweiten Wirbelschicht stark reduzierendes Gas und ein großer Teil des entstandenen abgeschwelten kohlenstoffhaltigen Materials ausgetragen werden, das abgeschwelte kohlenstoffhaltige Material vom Gas abgetrennt und in die erste Wirbelschicht zurückgeführt wird, ein Teil des Gases nach einer Reinigung und $CO_2$-Entfernung als Fluidisierungsgas in die zweite Wirbelschicht zurückgeleitet wird, aus dem unteren Teil der zweiten Wirbelschicht das reduzierte Material mit einer Matallisierung von 50 bis 80 % zusammen mit dem restlichen Teil des abgeschwelten kohlenstoffhaltigen Materials ausgetragen wird, die Menge des im Kreislauf geführten abgeschwelten kohlenstoffhaltigen Materials ein Vielfaches der Menge der chargierten eisenoxidhaltigen Materialien beträgt, der Wärmeinhalt der aus der ersten in die zweite Wirbeischicht geleiteten-suspension zur Deckung des Wärmeverbrauchs in der zweiten Wirbelschicht verwendet wird.

Bei der Erzgewinnung und der Aufbereitung ärmerer Eisenerze fallen zunehmend feinkörnige Erze an. Für die Direktreduktion dieser feinkörnigen Erze unterhalb der Schmelztemperatur sind besonders Wirbelschichtverfahren geeignet, da diese sehr günstige Stoff- und Wärmeübergangsverhältnisse aufweisen. Bei der Direktreduktion mit festen, kohlenstoffhaltigen Reduktionsmitteln müssen folgende verschiedene Vorgänge nacheinander ablaufen: Aufheizen von Erz und Kohle, Schwelen der Kohle, Vergasen der Kohle, Reduktion des Erzes und evtl. Abkühlen des Endproduktes.

Aus der EP-A-255 180 ist das eingangs geschilderte Verfahren zur Direktreduktion von feinkörnigen eisenoxidhaltigen Materialien in zwei hintereinandergeschalteten Wirbelschichten bekannt. Bevorzugte Ausgestaltungen bestehen darin, daß die Eintrittstemperatur der Suspension aus der ersten Wirbelschicht in die zweite Wirbelschicht 30 bis 80°C höher liegt als die Temperatur des aus dem Oberteil der zweiten Wirbelschicht abgezogenen stark reduzierenden Gases, und die Menge des im Kreislauf geführten abgeschwelten kohlenstoffhaltigen Materials das 10- bis 50-fache des eingesetzten eisenoxidhaltigen Materials beträgt; daß aus dem aus dem unteren Teil der zweiten Wirbelschicht ausgetragene Material das abgeschwelte kohlenstoffhaltige Material abgetrennt wird, und mindestens ein Teil in die erste Wirbelschicht zurückgeführt wird; daß das eisenoxidhaltige Material vor dem Einsatz in die erste Wirbelschicht durch das stark reduzierende Gas aus der zweiten Wirbelschicht vorgewärmt wird; daß das reduzierte Material in Schmelzreaktoren vollständig reduziert und eingeschmolzen wird, und das Abgas der Schmelzreaktoren als starkreduzierendes Gas in die zweite Wirbelschicht geleitet wird; und daß ein Teil des abgetrennten, abgeschwelten kohlenstoffhaltigen Materials in den Schmelreaktor chargiert wird. Dieses Verfahren hat den Vorteil, daß bei der Direktreduktion mittels fester kohlenstoffhaltiger Reduktionsmittel in Wirbelschichten lokale Uberhitzungen und Ansatzbildungen, insbesondere an den Düsen für die Zuführung sauerstoffhaltiger Gase, vermieden werden, und daß ein störungsfreier Betrieb der Reduktion der Wirbelschichten möglich ist. In der ersten Wirbelschicht, in die zur Erzeugung der notwendigen Wärme sauerstoffhaltige Gase eingeleitet werden, liegt praktisch kein metallisches Eisen vor. Eine Reoxidation von metallischem Eisen und lokale Überhitzung an den Düsen werden also vermieden. In der zweiten Wirbelschicht wird dies ebenfalls vermieden, da dort keine sauerstoffhaltigen Gase eingeleitet werden. Eine Rückführung von metallischem Eisen aus der zweiten Wirbelschicht in die erste Wirbelschicht wird ebenfalls vermieden.

Der Erfindung liegt die Aufgabe zugrunde, bei diesem Verfahren der Direktreduktion den Primärenergie-Bedarf möglichst gering zu halten, das Verfahren wärmeautark oder unter Verwendung von minderwertiger Fremdwärme, wie z. B. Niederdruckdampf, durchzuführen und keine überschüssige Energie im Verfahren zu erzeugen. Weiterhin soll die Qualität des erzeugten Produktes verbessert werden.

Die Lösung dieser Aufgabe erfolgt erfindungsgemäß bei dem eingangs geschilderten Verfahren dadurch, daß das reduzierte Material in einem Schmelzreaktor vollständig reduziert und eingeschmolzen wird, das aus der Schmelze austretende Gas direkt oberhalb der Schmelze durch Aufblasen von sauerstoffhaltigen Gasen mit einem Sauerstoffgehalt von mindestens 50 Vol.-% auf 40 - 70 Vol.-% $CO_2$ + $H_2O$ im Gasgemisch, stickstoff-frei gerechnet, nachverbrannt wird, die Nachverbrennungswärme weitgehend auf die Schmelze übertragen wird, und das teilweise nachverbrannte Gasgemisch in einer zweiten Nachverbrennung durch Zufuhr von sauerstoffhaltigen Gasen vollständig nachverbrannt wird.

Unter dem Ausdruck "expandierte Wirbelschicht" sind stark expandierte Wirbelschichten zu verstehen, die oberhalb der Schwebegeschwindigkeit der Feststoffteilchen betrieben werden. Dieses Wirbelschichtprinzip zeichnet sich dadurch aus, daß - im Unterschied zur "klassischen" Wirbelschicht, bei der eine dichte Phase durch einen deutlichen Dichtesprung von dem darüber befindlichen Gasraum getrennt ist - Verteilungszustände ohne definierte Grenzschicht vorliegen. Ein Dichtesprung zwischen dichter Phase und darüber befindlichem Staubraum ist nicht vorhanden; jedoch nimmt innerhalb des Reaktors die Feststoffkonzentration von unten nach oben ständig ab. Aus dem oberen Teil des Reaktors wird eine Gas-Fest-Suspension ausgetragen.

Als kohlenstoffhaltiges Material können alle Kohlen von Anthrazit bis zum Lignit, kohlenstoffhaltige Mineralien und Abfallprodukte - wie z. B. Ölschiefer, Petrolkoks oder Waschberge - eingesetzt werden, die bei Raumtemperatur im festen Zustand vorliegen. Als sauerstoffhaltiges Gas wird vorzugsweise zumindest sauerstoffangereicherte Luft in die erste Wirbelschicht eingeleitet. Die Verweilzeit des Gases in der ersten Wirbelschicht liegt etwa im Bereich von 0,5 bis 3 sec und wird durch Wahl der Höhe des Reaktors eingestellt. Innerhalb der oben angegebenen Grenzwerte ist auch eine Einstellung der Verweilzeit durch Regelung der Gasgeschwindigkeit möglich. Die Verweilzeit des eisenoxidhaltigen Materials in der ersten Wirbelschicht beträgt etwa 0,2 bis 1,5 min. Die mittlere Feststoffdichte der ersten Wirbelschicht beträgt 100 bis 300 kg/m$^2$, bezogen auf den leeren Ofenraum. In die zweite Wirbelschicht wird kein freien Sauerstoff enthaltendes Gas eingeleitet. Die Verweilzeit des Gases wird auf über 3 sec und die Verweilzeit des eisenoxidhaltigen Materials auf etwa 15 bis 40 min eingestellt. Der zweite Reaktor hat dementsprechend eine größere Höhe als der erste Reaktor. Die mittlere Feststoffdichte im unteren Teil der zweiten Wirbelschicht unterhalb der Einleitung der Gas-Feststoff-Suspension aus der ersten Wirbelschicht beträgt 300 bis 600 kg/m$^2$, bezogen auf den leeren Ofenraum. Im oberen Teil beträgt die mittlere Feststoffdichte 50 bis 200 kg/m$^2$. Die Einleitung der Gas-Feststoff-Suspension erfolgt mindestens 1 m oberhalb der Zuführung des starkreduzierenden Fluidisieungsgases bis zu einer Höhe von maximal 30 % der Ofenhöhe. Bei Einhaltung dieser Betriebsbedingungen wird eine starke Separierung von abgeschweltem kohlenstoffhaltigen Material und reduziertem eisenhaltigen Material in der zweiten Wirbelschicht erreicht. Die im zweiten Reaktor erforderliche Wärme wird von der Gas-Feststoff-Suspension aus dem ersten Reaktor eingebracht, wobei die überwiegende Wärmemenge durch das als Wärmeträger dienende abgeschwelte kohlenstoffhaltige Material eingebracht wird. Dazu wird die Temperatur in der ersten Wirbelschicht auf einen Wert eingestellt, der höher liegt als die Austrittstemperatur aus der zweiten Wirbelschicht. Die dazu erforderliche Überhitzung in der ersten Wirbelschicht richtet sich nach der Menge des umlaufenden abgeschwelten kohlenstoffhaltigen Materials. Die Temperatur in den Wirbelschichten liegt je nach Reaktivität des kohlenstoffhaltigen Materials im Bereich von 850 bis 1100°C. Das reduzierte Produkt wird aus dem unteren Teil abgezogen, wobei allerdings auch eine gewisse Menge an abgeschweltem kohlenstoffhaltigen Material mitabgezogen wird. Die Wirbelschichten können ohne großen Überdruck oder mit Überdruck bis zu 20 bar betrieben werden. Ein Teil des Abgases aus der zweiten Wirbelschicht wird aus dem Kreislauf abgezogen und als Brenngas für die Wiederaufheizung des Kreislaufgases verwendet. Das Aufblasen der sauerstoffhaltigen Gase zur ersten Nachverbrennung der aus der Schmelze austretenden Gase erfolgt mittels Düsen, die in der Seitenwand des Schmelzreaktors angeordnet sind, und die vorzugsweise zur Schmelze hin geneigt angeordnet sind, so daß die Gasstrahlen auf die Oberfläche auftreffen. Mehr als 50 % der bei der ersten Nachverbrennung entstandenen Wärme, vorzugsweise mehr als 70 %, werden auf die Schmelze übertragen. Die zweite Nachverbrennung erfolgt zweckmäßigerweise durch Zuführung von Luft. Die Wärme im Abgas des Schmelzreaktors, die nicht auf die Schmelze übertragen wird, wird vorzugsweise zur Dampferzeugung benutzt. Der erzeugte Dampf wird vorteilhafterweise für die CO$_2$-Wäsche verwendet.

Die Vorteile dieser Arbeitsweise bestehen darin, daß das System der Reduktion in den Wirbel schichten und das System der Behandlung im Schmelzreaktor gasseitig unabhängig voneinander betrieben werden. Dadurch können beide Systeme optimal betrieben werden. Die gesamte aus dem kohlenstoffhaltigen Material erzeugte Wärme wird optimal in den Systemen ausgenutzt und es muß keine überschüssige Energie abgegeben werden. Der Bedarf an Primärenergie wird optimal niedrig gehalten.

Eine Ausgestaltung besteht darin, daß die zweite Nachverbrennung im Oberteil des Schmelzreaktors durch Einblasen von sauerstoffhaltigen Gasen erfolgt. Die für die zweite Nachverbrennung erforderlichen sauerstoffhaltigen Gase, insbesondere Luft, werden in den Oberteil des Schmelzreaktors so eingeblasen, daß dort die vollständige zweite Nachverbrennung erfolgt.

Eine Ausgestaltung besteht darin, daß die zweite Nachverbrennung außerhalb des Schmelzreaktors erfolgt. Diese Nachverbrennung erfolgt in einer nachgeschalteten Brennkammer.

Eine Ausgestaltung besteht darin, daß aus dem aus dem unteren Teil der zweiten Wirbelschicht ausgetragenen Material das überschüssige abgeschwelte kohlenstoffhaltige Material durch Heißabtrennung entfernt wird, wobei der C-Gehalt im reduzierten Material auf maximal 5 Gew.-% eingestellt wird, und das reduzierte Material im heißen Zustand kompaktiert wird. Die Heißabtrennung kann durch Sieben, Sichten oder Magnetscheidung erfolgen und wird bei einer Temperatur zwischen 600 und 800°C durchgeführt. Die Kompaktierung kann durch Brikettieren oder Walzen eines Bandes und anschließende Zerkleinerung erfolgen. Es werden sehr stabile Formkörper erzeugt. Die Formkörper können verkauft oder z. B. in Elektroöfen eingeschmolzen werden.

Diese Arbeitsweise hat den Vorteil, daß ein Produkt erzeugt wird, das für seine Weiterverarbeitung verbesserte Eigenschaften aufweist. Außerdem ist es für den Transport oder eine Lagerung wesentlich besser geeignet, da die Gefahr der Reoxidation und Verstaubung vermieden wird.

Die Erfindung wird anhand von Zeichnungen und eines Beispiels näher erläutert.

Fig. 1   ist ein Fließschema einer Arbeitsweise mit zwei Wirbelschichten und einer nachgeschalteten Schmelzreduktion mit Nachverbrennung im Schmelzreaktor.

Fig. 2   ist ein Fließschema einer Arbeitsweise mit drei Wirbelschichten und einer nachgeschalteten Schmelzreduktion mit Nachverbrennung im Schmelzreaktor.

In den Figuren wird in die erste Wirbelschicht (1) über Leitung (2) Erz eingeleitet, das in (nicht dargestellten) Suspensionswärmeaustauschern vorgewärmt wird. Über Leitung (3) wird Kohle, über Leitung (4) Sauerstoff und über Leitung (5) Fluidisierungsgas eingeleitet. Über Leitung (6) wird die Gas-Feststoff-Suspension in die zweite Wirbelschicht (7) eingeleitet, in die über Leitung (8) Fluidisierungsgas eingeleitet wird. Über Leitung (9) wird eine Gas-Feststoff-Suspension in den Abscheidezyklon (10) geleitet, die einen großen Anteil an abgeschweltem kohlenstoffhaltigem Material enthält.

Der abgeschiedene Feststoff wird über Leitung (11) in die Wirbelschicht (1) zurückgeführt. Das aus dem Abscheidezyklon (10) austretende Abgas wird über Leitung (12) (über nicht dargestellte Suspensionswärmeaustauscher, in denen das Erz vorgewärmt wird) in den Abhitzkessel (13) geleitet, in den über Leitung (14) Wasser eingeleitet und über Leitung (15) Dampf abgezogen wird. Das gekühlte Abgas wird über Leitung (16) in eine Gasreinigung (17) geleitet, aus der über Leitung (18) der abgeschiedene Staub und über Leitung (19) das gereinigte Abgas abgeführt werden. Das Abgas wird in einer $CO_2$-Wäsche (20) von $CO_2$ befreit. Vor der $CO_2$-Wäsche muß das Gas gekühlt werden. Dabei wird gleichzeitig Wasserdampf auskondensiert (nicht dargestellt).

Das in der Waschflüssigkeit absorbierte $CO_2$ wird in dem Desorber (21) durch Einleiten von Dampf über Leitung (22) ausgetrieben und über Leitung (23) abgeleitet. Die Verbindung zwischen dem Wäscher (20) und dem Desorber (21) ist nur schematisch dargestellt. Das von $CO_2$ befreite, stark reduzierende Gas wird über Leitung (24) in den Aufheizer (25) geleitet, in den über Leitung (26) ein Teilstrom des Abgases aus Leitung (19) und über Leitung (27) Verbrennungsluft geleitet werden. Ein Teilstrom des Gases aus Leitung (26) wird über Leitung (26a) in eine nicht dargestellte Sauerstoff-Erzeugung geleitet. Das aufgeheizte, stark reduzierende Gas wird über die Leitungen (5) und (8) als Fluidisierungsgas in die Wirbelschichten (1) und (7) geleitet. Die Verbrennungsgase werden aus dem Aufheizer (25) über Leitung (28) in den Kamin geleitet. Reduziertes Material und ein Teil des abgeschwelten kohlenstoffhaltigen Materials werden aus der Wirbelschicht (7) über (29) abgezogen.

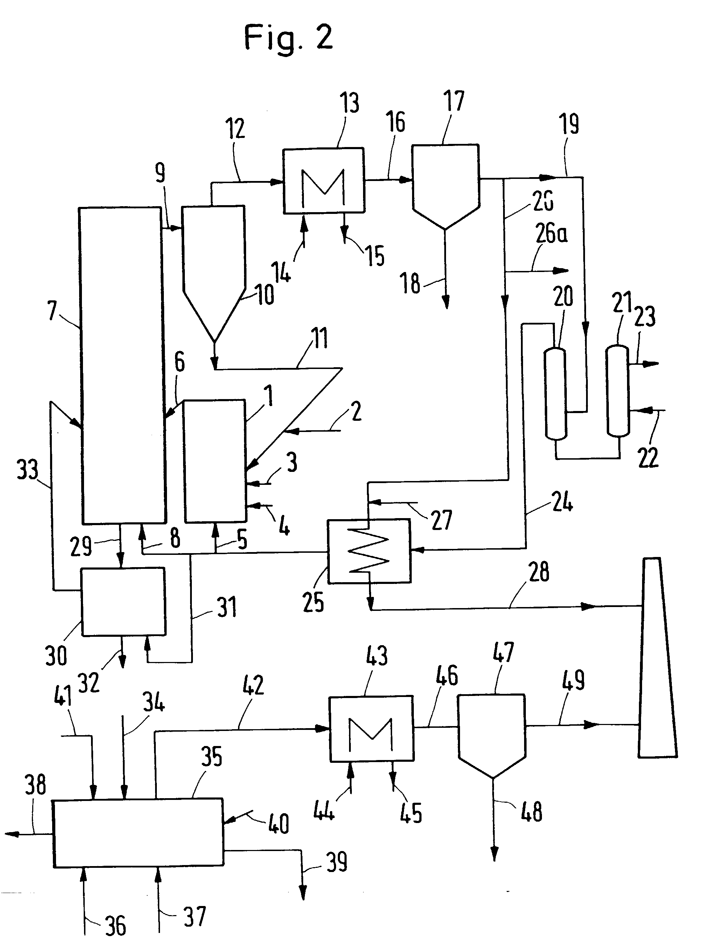

In Figur 2 wird das reduzierte Material in die dritte Wirbelschicht (30) geleitet, in die über Leitung (31) stark reduzierendes Gas als Fluidisierungsgas geleitet wird. Das weiter reduzierte Material wird über Leitung (32) abgezogen. Über Leitung (33) wird das Abgas als Sekundärgas in die zweite Wirbelschicht (7) geleitet.

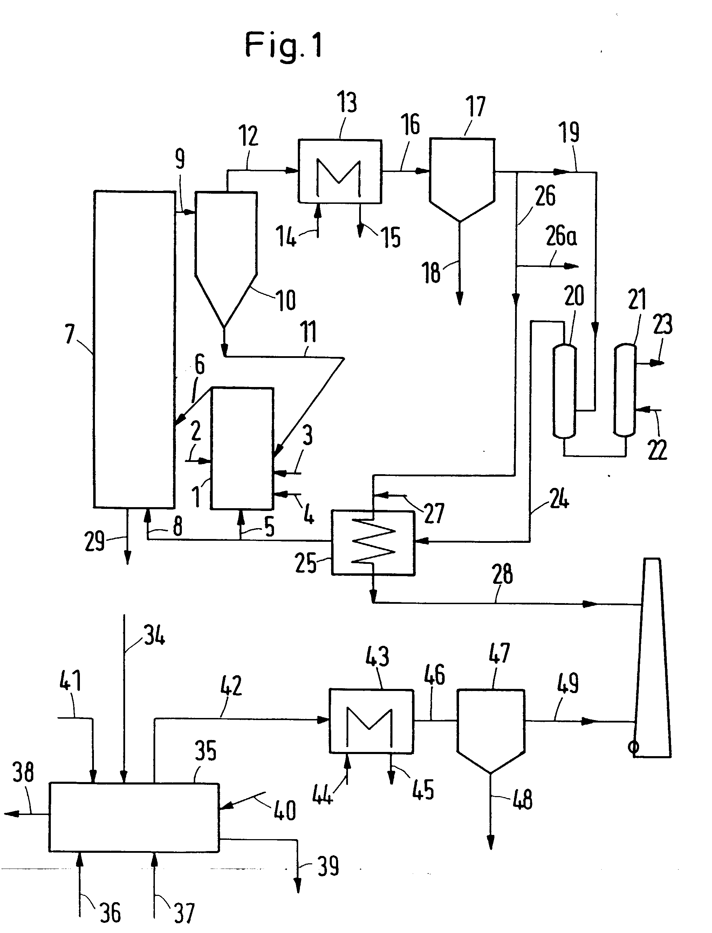

In Figur 1 wird das über Leitung (29) abgezogene, reduzierte Material und in Figur 2 das über Leitung (32) abgezogene, weiter reduzierte Material über Leitung (34) in den Schmelzreaktor (35) chargiert. In die Schmelze werden vom Boden über Düsen (36) Sauerstoff und über Düsen (37) abgeschwelte Kohle eingeblasen. Schlacke wird über (38) und flüssiges Eisen über (39) abgezogen. Über Düsen (40), die zur Oberfläche des Bades hin geneigt angeordnet sind, wird Sauerstoff auf die Oberfläche geblasen. Dadurch erfolgt die erste Nachverbrennung des aus dem Bad austretenden Gases. Über Düsen (41) wird Luft zur zweiten Nachverbrennung in den oberen Teil des Schmelzreaktors geblasen. Das Abgas wird über Leitung (42) in den Wärmeaustauscher (43) geleitet, in den über Leitung (44) Wasser eingeleitet und über Leitung (45) Dampf abgezogen wird. Das gekühlte Abgas wird über Leitung (46) in die Gasreinigung (47) eingeleitet, aus der über (48) der abgeschiedene Staub ausgetragen wird. Das gereinigte Abgas wird über Leitung (49) in den Kamin geleitet.

Beispiel

Die Positionen beziehen sich auf die Figur 2.

Ein Eisenerz wird zweistufig in Suspensionswärmeaustauschern auf 820°C vorgewärmt.

| Position 2: | 78,4 t/h Erz |
|---|---|
| Position 29: | 58,2 t/h vorreduziertes Erz mit 75 % Reduktionsgrad<br>5,9 t/h abgeschwelte Kohle, 950°C |
| Position 38: | 6,3 t/h Schlacke mit $CaO/SiO_2$ = 1,2 |
| Position 39: | 52,1 t/h Vormetall (hot metal) mit 2,4 % C und 1550°C |
| Position 3: | 27,5 t/h Kohle mit 1 % $H_2O$ Korngröße < 5 mm |
| Position 4: | 10 300 $Nm^3$/h Sauerstoff mit 99,5 % $O_2$ |
| Position 12: | 101 000 $Nm^3$/h mit 560°C<br>47 % CO, 19 % $CO_2$, 18 % $H_2$, 13 |

% $H_2O$
0,5 % $CH_4$, 3 % $N_2$

Position 19:         75 200 Nm³/h

Position 26:         15 400 Nm³/h

Position 5:          8 000 Nm³/h mit 1 % $CO_2$ und 750°C

Position 8:          31 800 Nm³/h mit 1 % $CO_2$ und 750°C

Position 31:         20 000 Nm³/h mit 1 % $CO_2$ und 750°C

Position 35, 40:     5800 Nm³/h Sauerstoff mit 99,5 % $O_2$
1. Nachverbrennung $\frac{CO_2}{CO + CO_2}$ = 50 %

Position 41:         15 000 Nm³/h Luft

Position 42:         17 000 Nm³/h Abgas

Position 15:         24 t/h Dampf mit 5 bar

Position 45:         36 t/h Dampf mit 5 bar

Position 22:         61 t/h Dampf mit 5 bar

Position 23:         15200 Nm³/h $CO_2$

## Patentansprüche

1. Verfahren zur Direktreduktion von eisenoxidhaltigen Materialien unter Verwendung von festen kohlenstoffhaltigen Reduktionsmitteln, wobei die eisenoxidhaltigen Materialien in einer ersten expandierten Wirbelschicht unter Zufuhr von festen kohlenstoffhaltigen Reduktionsmitteln sowie von Fluidisierungsgas unter schwach reduzierenden Bedingungen und einer so kurzen Verweilzeit des Gases in der Wirbelschicht reduziert werden, daß das Reduktionspotential maximal zur Reduktion bis zum FeO-Stadium führt, die aus der ersten expandierten Wirbelschicht ausgetragene Gas-Feststoff-Suspension in eine zweite expandierte Wirbelschicht geleitet wird, in die zweite Wirbelschicht ein stark reduzierendes Gas als Fluidisierungsgas eingeleitet wird, aus dem Oberteil der zweiten Wirbelschicht stark reduzierendes Gas und ein großer Teil des entstandenen abgeschwelten kohlenstoffhaltigen Materials ausgetragen werden, das abgeschwelte kohlenstoffhaltige Material vom Gas abgetrennt und in die erste Wirbelschicht zurückgeführt wird, ein Teil des Gases nach einer Reinigung und $CO_2$-Entfernung als Fluidisierungsgas in die zweite Wirbelschicht zurückgeleitet wird, aus dem unteren Teil der zweiten Wirbelschicht das reduzierte Material mit einer Metallisierung von 50 bis 80 % zusammen mit dem restlichen Teil des abgeschwelten kohlenstoffhaltigen Materials ausgetragen wird, die Menge des im Kreislauf geführten abgeschwelten kohlenstoffhaltigen Materials ein Vielfaches der Menge der chargierten eisenoxidhaltigen Materialien beträgt, der Wärmeinhalt der aus der ersten in die zweite Wirbelschicht geleiteten Suspension zur Deckung des Wärmeverbrauchs in der zweiten Wirbelschicht verwendet wird, dadurch gekennzeichnet, daß das reduzierte Material in einem Schmelzreaktor vollständig reduziert und eingeschmolzen wird, das aus der Schmelze austretende Gas direkt oberhalb der Schmelze durch Aufblasen von sauerstoffhaltigen Gasen mit einem Sauerstoffgehalt von mindestens 50 Vol.-% auf 40 bis 70 Vol.-% $CO_2$ + $H_2O$ im Gasgesmisch, stickstoff-frei gerechnet, nachverbrannt wird, die Nachverbrennungswärme weitgehend auf die Schmelze übertragen wird, und das teilweise nachverbrannte Gasgemisch in einer zweiten Nachverbrennung durch Zufuhr von sauerstoffhaltigen Gasen vollständig nachverbrannt wird.

2. Verfahren nach Anspruch 1, dadurch gekennzeichnet, daß die zweite Nachverbrennung im Oberteil des Schmelzreaktors durch Einblasen von sauerstoffhaltigen Gasen erfolgt.

3. Verfahren nach Anspruch 2, dadurch gekennzeichnet, daß die zweite Nachverbrennung außerhalb des Schmelzreaktors erfolgt.

4. Verfahren nach Anspruch 1, dadurch gekennzeichnet, daß aus dem aus dem unteren Teil der zweiten Wirbelschicht ausgetragenen Material das überschüssige abgeschwelte kohlenstoffhaltige Material durch Heißabsiebung entfernt wird, wobei der C-Gehalt im reduzierten Produkt auf maximal 5 Gew.-% eingestellt wird, und das reduzierte Produkt im heißen Zustand kompaktiert wird.

## Claims

1. A process for the direct reduction of iron-oxide-containing materials by using solid carbonaceous reducing agents, where the iron-oxide-containing materials are reduced in a first expanded fluidized bed by supplying solid carbonaceous reducing agents as well as fluidizing gas under slightly reducing conditions and such a short dwell time of the gas in the fluidized bed that the reduction potential maximally leads to the reduction to the FeO stage, the gas-solids suspension discharged from the first expanded fluidized bed is introduced into a second expanded fluidized bed, into the second fluidized bed a strongly reducing gas is introduced as fluidizing gas, from the upper part of the second fluidized bed a strongly reducing gas and a large part of the resulting calcined carbonaceous material are discharged, the calcined carbonaceous material is separated from the gas and recirculated to the first fluidized bed, after a cleaning and the removal of $CO_2$ part of the gas is recirculated as fluidizing gas to the second fluidized bed, from the lower part of the second fluidized bed the reduced material with a metallization of 50 to 80 % is discharged together with the remaining part of the calcined carbonaceous material, the quantity of the circulated calcined carbonaceous material is a multiple of the quantity of the charged iron-oxide-containing materials, the heat content of the suspension supplied from the first to the second fluidized bed is used for covering the heat consumption in the second fluidized bed, characterized in that the reduced material is completely reduced and molten in a melting reactor, the gas escaping from the melt is reheated directly above the melt by blowing oxygen-containing gases with an oxygen content of at least 50 vol-% onto 40 to 70 vol-% $CO_2 + H_2O$ in a gas mixture, calculated free from nitrogen, the postcombustion heat is largely transferred to the melt, and the partly reheated gas mixture is completely reheated in a second postcombustion by supplying oxygen-containing gases.

2. The process as claimed in claim 1, characterized in that the second postcombustion is effected in the upper part of the melting reactor by blowing in oxygen-containing gases.

3. The process as claimed in claim 2, characterized in that the second postcombustion is effected outside the melting reactor.

4. The process as claimed in claim 1, characterized in that from the material discharged from the lower part of the second fluidized bed the excess calcined carbonaceous material is removed by hot screening, where the C content in the reduced product is adjusted to a maximum of 5 wt-%, and the reduced product is compacted in the hot condition.

## Revendications

1. Procédé de réduction directe de matières contenant des oxydes de fer en utilisant des réducteurs carbonacés solides, dans lequel les matières contenant des oxydes de fer sont réduites dans une première couche fluidisée expansée avec apport de réducteurs carbonacés solides ainsi que d'un gaz de fluidisation dans des conditions faiblement réductrices et avec un temps de séjour du gaz dans la couche fluidisée suffisamment court pour que le potentiel de réduction conduise au maximum à la réduction jusqu'au stade FeO, la suspension gaz-matières solides déchargée de la première couche fluidisée expansée est envoyée dans une seconde couche fluidisée expansée, un gaz fortement réducteur est introduit comme gaz de fluidisation dans la seconde couche fluidisée, de la partie supérieure de laquelle sont déchargés un gaz fortement réducteur et une grande partie de la matière carbonacée ayant subi une carbonisation qui s'est formée, on sépare du gaz la matière carbonacée ayant subi une carbonisation et on la renvoie dans la première couche fluidisée, on renvoie une partie du gaz après une épuration et élimination de $CO_2$, comme gaz de fluidisation dans la seconde couche fluidisée, de la partie inférieure de laquelle on décharge la matière réduite ayant une métallisation de 50 à 80 % en même temps que la partie restante de la matière carbonacée ayant subi une carbonisation, la quantité de la matière carbonacée ayant subi une carbonisation recyclée étant un multiple de la quantité des matières contenant des oxydes de fer introduites, la capacité calorifique de la suspension envoyée de la première dans la seconde couche fluidisée étant utilisée pour couvrir les besoins en chaleur dans la seconde couche fluidisée, caractérisé en ce que la matière réduite est complètement réduite et fondue dans un réacteur à fusion, en ce que le gaz sortant de la masse fondue est soumis à une postcombustion juste au-dessus de la masse fondue par insufflation de gaz contenant de l'oxygène ayant une teneur en oxygène d'au moins 50 % en volume pour 40 à 70 % en volume de $CO_2 + H_2O$ dans le mélange gazeux, ces valeurs étant calculées sur la base du mélange exempt d'azote, la chaleur de postcombustion est transférée dans une large mesure à la masse fondue et le mélange gazeux ayant subi une postcombustion partielle est soumis dans une deuxième postcombustion à une postcombustion complète par apport de gaz contenant de l'oxygène.

2. Procédé selon la revendication 1, caractérisé en ce que la deuxième postcombustion s'effectue dans la partie supérieure du réacteur à fusion par insufflation de gaz contenant de l'oxygène.

3. Procédé selon la revendication 2, caractérisé en ce que la deuxième postcombustion s'effectue en dehors du réacteur à fusion.

4. Procédé selon la revendication 1, caractérisé en ce qu'on élimine de la partie inférieure de la seconde couche fluidisée par tamisage à chaud de la matière carbonacée ayant subi une carbonisation en excès, la teneur en C du produit réduit étant ajustée à 5 % en poids au maximum et le produit réduit étant compacté à l'état chaud.

# Fig.1

# Fig. 2